# EUROPÄISCHE PATENTANMELDUNG

(11) **EP 1 245 425 A1**
(43) Veröffentlichungstag der Anmeldung: **02.10.2002**
(21) Anmeldenummer: 02006815.1
(22) Anmeldetag: 25.03.2002
(51) Int. Cl.: B60K 17/356, B60K 23/08

(54) **Verfahren zum Steuern einer selbstfahrenden Baumaschine und selbstfahrende Baumaschine**

(30) Priorität: 30.03.2001 DE 10115797
(71) Anmelder: Joseph Vögele AG, D-68146 Mannheim (DE)
(72) Erfinder: Berghoff, Peter, Dipl.-Ing., 53578 Windhagen (DE); Eul, Achim, Dipl.-Ing., 68199 Mannheim (DE); Greulich, Rolf, Dipl.-Ing., 76684 Östringen (DE); Letz, Andreas, Dipl.-Ing., 68259 Mannheim (DE)
(74) Vertreter: Grünecker, Kinkeldey, Stockmair & Schwanhäusser Anwaltssozietät

(57) **Zusammenfassung**

Ein Verfahren zum Steuern einer Baumaschine (M), insbesondere eines Rad-Straßenfertigers (S), umfasst mehrere Schritte: Für die Vorderräder (5, 6, 5', 6') werden Solldrehzahlen um eine Solldifferenz höher als die Drehzahl im Heckantrieb (HA) vorgegeben, mit der ein maximales übertragbares Drehmoment erreichbar ist. Das Drehmoment für den Frontantrieb (FA) wird abhängig von einer gemessenen Ist-Drehzahldifferenz zwischen dem Frontantrieb und dem Heckantrieb und der gewählten Solldifferenz eingestellt. Bei vom Frontantrieb maximal übertragbarem Drehmoment bleibt die Solldrehzahlvorgabe für jedes Vorderrad durch Bevorrechtigen der Drehmomentsteuerung gegenüber der Solldrehzahlvorgabe wirkungslos. Bei Traktionsverlust wenigstens eines Vorderrades wird bei unveränderter Drucksteuerung dessen Drehzahl mit der Solldrehzahl begrenzt. In der Baumaschine weist jede Antriebseinheit (12, 13, 12', 13') im Frontantrieb (FA) einen individuellen Hydraulikstromregelkreis (20, 21, 22, 23) auf.

## Beschreibung

Die Erfindung betrifft ein Verfahren gemäß Oberbegriff des Anspruchs 1 sowie eine Baumaschine gemäß Oberbegriff des Anspruchs 9.

Bei in Baumaschinen gemäß DE 36 20 163 A, DE 33 31 651 A oder DE 38 42 405 A angewandten Verfahren wird bei aktiviertem Frontantrieb jeweils der das aufgebrachte Drehmoment einstellende Druck unter anderem nach Maßgabe der Drehzahlerfassung geregelt. Da für die angetriebenen Vorderräder keine eigenen Stromregelkreise vorgesehen sind, muss bei Traktionsverlust der das Drehmoment bestimmende Druck verringert werden, was in der Folge zu einer Verringerung des gesamten aufgebrachten Drehmoments am Frontantrieb führt. Auf diese Weise lässt sich kaum eine gleichmäßige Drehmomentverteilung zwischen dem Heckantrieb und dem Frontantrieb erzielen und wird außerdem in bestimmten Betriebssituationen nicht die maximale Zugkraft umgesetzt. Ferner wird nach einem Traktionsverlust der Druck erst wieder allmählich hochgefahren, so dass bei Greifen eines zunächst durchgehenden Vorderrads die maximale Zugkraft erst mit einer unerwünschten Verzögerung wieder aufgebaut werden muss.

Der Erfindung liegt die Aufgabe zugrunde, ein Verfahren sowie eine Baumaschine, insbesondere einen Rad-Straßenfertiger anzugeben, bei denen eine möglichst gleichmäßige Drehmomentverteilung zwischen dem Heck- und dem Frontantrieb und in allen Betriebssituationen eine maximale und unmittelbar zur Verfügung stehende Zugkraft erreichbar sind.

Die gestellte Aufgabe wird mit den Merkmalen des Anspruchs 1 und des nebengeordneten Anspruchs 9 gelöst.

Aufgrund der vorgegebenen Solldifferenz (z.B. in Prozent) wird durch den äußeren mechanischen Zwang bei jeder Fahrgeschwindigkeit am Frontantrieb ein maximales Drehmoment aufgebracht. Da sich das aufgebrachte Drehmoment nach der gemessenen Drehzahldifferenz und der Solldifferenz richtet, wird das vom Frontantrieb aufgebrachte Drehmoment um so größer, desto höher die Drehzahl des Heckantriebs im Vergleich zur Drehzahl des Frontantriebs ist. Die Drehzahl des Heckantriebs nähert sich dann der Drehzahl des Frontantriebs oder übersteigt sogar die des Frontantriebs, wenn die Hinterräder unter der aufzubringenden Zugkraft Schlupf aufbauen. Dadurch nimmt das Drehmoment der Vorderräder zu und entsteht auch ein Vorderradschlupf, wodurch das Drehmoment und der Schlupf an den Hinterrädern abnehmen. Dies führt dazu, dass auch das von den Vorderrädern aufgebrachte Drehmoment etwas abfällt und sich schließlich ein Gleichgewichtszustand zwischen dem Drehmoment des Heckantriebs und dem Drehmoment des Frontantriebs einstellt. Ist der Vorderradschlupf gering, so dass kein Vorderrad bis an die jeweilige Solldrehzahl durchgeht, bleibt die Solldrehzahlvorgabe unwirksam. Die Drucksteuerung bewirkt den Aufbau des jeweils maximalen übertragbaren Drehmoments. Sollte ein Vorderrad die Traktion verlieren und kein nennenswertes Drehmoment mehr aufbringen, steigt seine Drehzahl zunächst auf die vorgegebene Solldrehzahl, an der sie gehalten wird. Die anderen, nach wie vor greifenden Vorderräder arbeiten davon unabhängig mit dem maximalen Drehmoment weiter, weil u.a. wegen des an der Solldrehzahl gefangenen Vorderrads die Drucksteuerung für die anderen Vorderräder unverändert durchgeführt wird. Die Drucksteuerung für das maximale Drehmoment hat höhere Priorität als die Solldrehzahlvorgabe, und zwar bis zum Erreichen der Traktionsgrenze, ab der das maximale Drehmoment nicht mehr umgesetzt werden kann. Bis dahin ist die Solldrehzahlvorgabe wirkungslos. Die Solldrehzahlvorgabe kommt erst zum Tragen, wenn ein Vorderrad aufgrund Traktionsverlusts kein ausreichendes Drehmoment mehr aufbringt und durchgeht. Dann wird es sozusagen mit der Solldrehzahl eingefangen. Dies vermeidet, dass das durchgehende Vorderrad die Steuerung weiterhin greifender Vorderräder unerwünscht beeinflusst. Da sich auf diese Weise ein relativ stabiles Drehmomentgleichgewicht zwischen dem Heckantrieb und dem Frontantrieb einstellt, wird in allen Betriebssituationen maximale Zugkraft erreicht. Da es bei Traktionsverlust wenigstens eines Vorderrads nicht zur Zurücknahme des das Drehmoment der anderen, greifenden Vorderräder bestimmenden Drucks kommt, steht die maximale Zugkraft sofort wieder zur Verfügung, wenn ein zuvor durchgehendes Vorderrad wieder greift.

Da in der Baumaschine jede Antriebseinheit im Frontantrieb einen individuellen Hydraulikstromregelkreis für ihren Hydromotor aufweist, lässt sich die Baumaschine zum Aufbringen maximaler Zugkraft in kritischen Betriebssituationen zusätzlich auch über den Hydraulikstrom steuern. Bei ordnungsgemäßen Traktionsverhältnissen werden die Vorderräder so schnell angetrieben, dass sie das maximal übertragbare Drehmoment aufbringen. Erst bei Durchgehen eines Vorderrades wird die Solldrehzahlvorgabe zur Drehzahlbegrenzung dieses Vorderrades eingesetzt und der Drucksteuerung überlagert, so dass die nach wie vor greifenden Vorderräder unabhängig vom Traktionsverlust wenigstens eines Vorderrades mit definiertem Drehmoment bzw. dem maximalen Drehmoment weiterarbeiten, und auch, bei wiedereinsetzender Traktion die maximale Zugkraft sofort wieder zur Verfügung steht.

Zweckmäßig wird das Erreichen der Solldrehzahl eines durchgehenden Vorderrades als Anlass für eine Korrektur der Drehzahl dieses Vorderrades genommen, um bei unveränderter Drucksteuerung und weiterhin definiertem Drehmoment bei den anderen Vorderrädern das durchgehende Vorderrad durch Verringern seiner Drehzahl wieder zum Greifen zu bringen.

Das Drehmoment der Vorderräder wird über die Drucksteuerung erzeugt, während die Solldrehzahlen mittels der Hydraulikströme eingestellt werden. Da die Hydraulikströme für die Vorderräder individuell variiert werden können, wird zweckmäßig nicht nur der Lenkwinkel bei der Steuerung berücksichtigt, sondern lässt sich jedes durchgehende Vorderrad individuell an seiner Solldrehzahl abfangen bzw. ggfs. später bis zum erneuten Greifen verlangsamen.

Um beim Lenken ein Verspannen im Antriebssystem zu vermeiden, wird der Lenkwinkel benutzt, um individuell unterschiedliche Solldrehzahlen der Vorderräder vorzugeben.

Bei der Feststellung der zwischen dem Heckantrieb und dem Frontantrieb vorliegenden ist-Drehzahldifferenz zum Einstellen des maximalen Drehmoments im Frontantrieb werden die gemessenen Drehzahlen mit Hilfe des gemessenen Ist-Lenkwinkels gewichtet. Die Drehzahlen der Vorderräder werden einzeln gemessen. Bestimmte Drehzahlen können in Abhängigkeit von bestimmten Kriterien bei der Berechnung des maximalen Drehmoments sogar ausgeschlossen werden.

Da das Verfahren von der ordnungsgemäßen Funktion der Drehzahlsensoren und/oder Lenkwinkelsensoren abhängt, ist es zur Erhöhung der Betriebssicherheit zweckmäßig, bei einer festgestellten Fehlerkondition automatisch auf einen Notbetrieb mit manueller Drehmomentvorwahl umzustellen. Damit lässt sich der wünschenswerte Gleichgewichtszustand zwischen dem Drehmoment des Heckantriebs und dem Drehmoment des Frontantriebs zwar nicht mehr zuverlässig einstellen, jedoch bringen die Vorderräder auch dann noch Zugkraft auf, um den Heckantrieb zu unterstützen und ausreichendes Lenkvermögen sicherzustellen.

Bei Transportfahrt der Baumaschine ist der Frontantrieb deaktiviert. Im Normalfall sind die hydrostatischen Heckantriebseinheiten über die offene Ausgleichsleitung verbunden. Die Verstelleinheiten, z.B. die Pumpen und Stromregler, an beiden Seiten, werden synchron bzw. in Abhängigkeit vom Lenkwinkel gewichtet, von einem Drehzahlregler angesteuert auf der Basis eines Mittelwerts der linken und rechten Drehzahlen. Ohne Lenkeinschlag arbeiten beide Antriebseinheiten über die Ausgleichsleitung auf gleichem Druckniveau. Bei Kurvenfahrt findet ein geringer Ölmengenaustausch von der Kurveninnenseite zur Kurvenaußenseite automatisch statt. Falls ein Hinterrad seine Traktion verlöre, würde der Systemdruck zusammenbrechen, da das durchgehende Hinterrad unkontrolliert durchrutschte und das greifende Hinterrad kein Drehmoment mehr aufbrächte, so dass die Baumaschine stehen bliebe. In diesem Fall wird deshalb die Drehzahldifferenz zwischen beiden Seiten erkannt und zum Anlass genommen, die Ausgleichsleitung abzusperren und automatisch auf getrennte Drehzahlregelung für beide Seiten umzustellen. Somit kann zumindest das Hinterrad mit Traktion weiterhin Zugkraft aufbringen. Nachdem eine vorbestimmte Zeit verstrichen ist, wird zweckmäßigerweise die Ausgleichsleitung automatisch auf Durchgang geschaltet.

In der Baumaschine ist im Antriebssystem der Hydraulikstromregelkreis zwischen dem jeweiligen Hydromotor und der Hauptpumpe vorgesehen. Dadurch ist der Hydraulikstromregelkreis in der Lage, ohne nennenswerte Beeinflussung des von der Hauptpumpe bereitgestellten Drucks für das maximale Drehmoment den Hydraulikstrom für sein zugeordnetes Vorderrad unter Führung durch die Regeleinheit individuell zu variieren.

Zweckmäßig wird eine lastdrucksignalgeregelte Stellpumpe als Hauptpumpe eingesetzt, die auf der Basis der Ist-Drehzahldifferenz und Solldifferenz den zum Erreichen des maximalen Drehmoments erforderlichen, lastabhängigen Druck rasch aufbaut (Pl-Regelung). Zwischen der Hauptpumpe und den Hydromotoren sind deren Hydraulikstromregelkreise angeordnet. Die Regelsektion der Stellpumpe erhält das jeweilige Lastdrucksignal aus dem Block. Die Drehmomentgrenze lässt sich durch eine Druckbegrenzungsvorrichtung wählen, die beispielsweise an der Druckseite der Hauptpumpe eingreift oder z. B. einzeln über Ventile.

Um stufenlos und feinfühlig steuern zu können, ist ein durch einen Lastdrucksignal-Proportionalmagneten betätigtes Einstellventil vorgesehen, das von der Regeleinheit betätigt werden kann, um das Lastdrucksignal einzustellen und/oder zu begrenzen.

Ist der Hydromotor des Vorderrads mit einem Ventil zum Einstellen des Schluckvolumens kombiniert, dann lässt sich über den Pilotdruck das Schluckvolumen verändern, beispielsweise zur Drehzahleinstellung oder zum Deaktivieren des Hydromotors für Transportfahrt.

Die Hydraulikstromregelung lässt sich steuerungstechnisch und baulich einfach und zuverlässig mittels eines Mehrwege-Proportionalsteuerschiebers vornehmen, der den Hydraulikstrom für den Hydromotor einstellt. Ein Drehzahl-Proportionalmagnet an einem Vorsteuerventil des Schiebers arbeitet mit moderaten Stellkräften und präzise. Ein Zulaufregler (Druckwaage) unterstützt die Stromregelung des Schiebers. Der Beaufschlagungsstrom des Drehzahl-Proportionalmagneten wird über die Regeleinheit geregelt. Alternativ könnte jeder Antriebseinheit jedoch auch eine eigene verstellbare Pumpe zugeordnet werden.

Insgesamt braucht bei der Regelung nur an dem Lastdrucksignal-Proportionalmagneten (zur Drehmomenteinstellung bzw. Drucksteuerung) und an dem Drehzahl-Proportionalmagneten (zur Drehzahleinstellung oder Solldrehzahlvorgabe) eingegriffen werden, so dass der Regelaufwand gering ist.

Die Regeleinheit ist zweckmäßigerweise computerisiert und mit einem Mikroprozessor ausgestattet, programmierbar und mit mehreren aktiven oder passiven Komponenten des Antriebssystems verknüpft, um permanent die zur Regelung erforderlichen Informationen und Leitgrößen bzw. Bestätigungen zu erhalten.

Zweckmäßig ist die Baumaschine ein Rad-Straßenfertiger mit wenigstens jeweils einem Hinterrad pro Seite und jeweils einem oder zwei lenkbaren und antreibbaren Vorderrädern pro Seite, wobei zwei lenkbaren Vorderrädern pro Seite der Vorzug zu geben ist. Die Drucksteuerung hat beim Aufbringen des maximalen Drehmoments am Frontantrieb Vorrang gegenüber der Solldrehzahlvorgabe für die Vorderräder. Die Solldrehzahlvorgabe soll bei dieser Steuerkondition nur dafür sorgen, dass die Vorderräder schnell genug drehen, um das maximal übertragbare Drehmoment aufzubringen. Es wird zunächst nicht bis zur Solldrehzahl gegangen, sondern die Solldrehzahlvorgabe als Regelparameter für das Drehmoment bzw. die Drucksteuerung benutzt. Erst bei Traktionsverlust wenigstens eines Vorderrads wird die Solldrehzahlvorgabe aktiv zum Einfangen dieses Vorderrads benutzt. Die Drucksteuerung bleibt davon unabhängig, so dass die nicht betroffenen Vorderräder ordnungsgemäß weiterarbeiten und das maximale Drehmoment übertragen. Um dem durchgehenden Vorderrad das erneute Greifen zu erleichtern, kann ggfs. sogar nur für dieses Vorderrad die Drehzahl zurückgenommen werden, bis wieder ordnungsgemäße Traktion vorliegt.

Anhand der Zeichnung wird eine Ausführungsform des Erfindungsgegenstandes erläutert. Es zeigen:
- Fig. 1:: eine Seitenansicht einer Baumaschine in schematischer Darstellung,
- Fig. 2:: in einer schematischen Draufsicht Hauptkomponenten des Antriebssystems der Baumaschine von Fig. 1, und
- Fig. 3:: ein Blockschaltbild mit wichtigen elektronischen und hydraulischen Komponenten des Antriebssystems der Fig. 2.

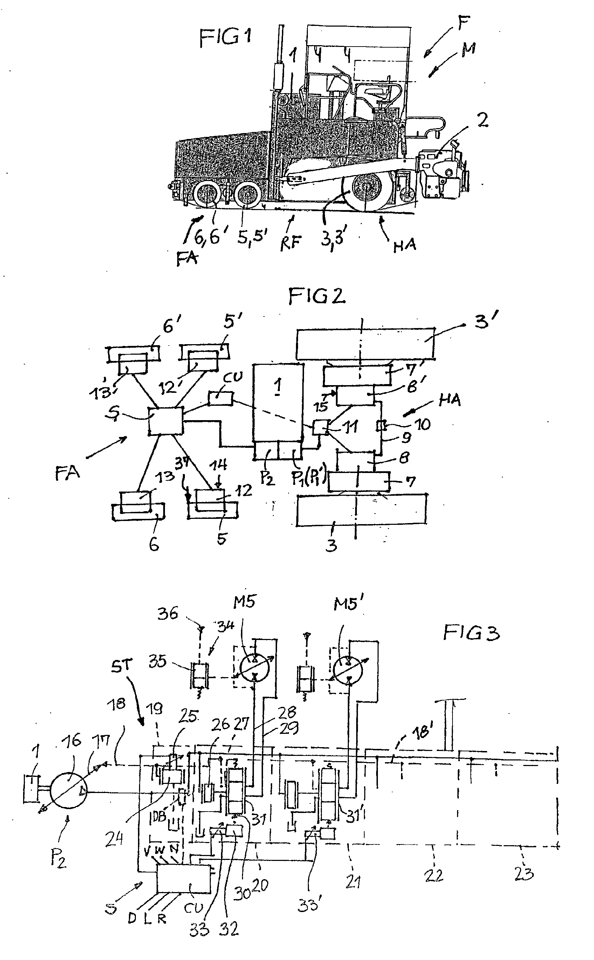

Eine selbstfahrende Baumaschine M in Fig. 1 ist ein Rad-Straßenfertiger F, der ein Primärantriebsaggregat 1, eine geschleppte Einbaubohle 2 und ein Radfahrwerk RF aufweist. Bei der gezeigten Ausführungsform sind pro Seite ein angetriebenes Hinterrad 3' im Heckantrieb HA und in einem wahlweise zuschaltbaren Frontantrieb FA pro Seite zwei Vorderräder 5, 6 vorgesehen. Wahlweise zuschaltbar bedeutet für den Rad-Deckenfertiger F, dass der Frontantrieb FA für Arbeitsfahrten benutzt wird, während er bei Transportfahrten deaktiviert ist. Es könnten pro Seite auch nur ein Vorderrad und mehrere Hinterräder vorgesehen sein. Sind im Frontantrieb FA (wie gezeigt) vier Vorderräder vorgesehen, so sollten alle angetrieben sein, um bei Arbeitsfahrt maximale Zugriffe zu erzielen.

In dem Antriebssystem in Fig. 2 treibt das Primärantriebsaggregat 1, z.B. ein Dieselmotor, eine (oder zwei) Hydraulikpumpe P1 (P1') für den Heckantrieb, in welchem den Hinterrädern 3, 3' getrennte hydrostatische Antriebseinheiten 8, 8', z.B. mit Getrieben 7, 7', zugeordnet sind. Die hydrostatischen Antriebseinheiten 8, 8' sind über eine Ausgleichsleitung 9 miteinander verbunden, die mittels eines Absperrorgans 10 wahlweise absperrbar ist. Über eine Drehzahlregelung 11 sind die hydrostatischen Antriebseinheiten 8, 8' z.B. mit der Pumpe P1 (P1') verbunden.

Das Primärantriebsaggregat 1 treibt ferner eine Hauptpumpe P2 für den Frontantrieb, die über eine hydraulische Steuervorrichtung S mit in diesem Fall vier hydrostatischen Antriebseinheiten 12, 13, 12', 13' der Vorderräder 5, 6, 5', 6' verbunden ist. Die Drehzahlregelung 11 und die hydraulische Steuereinrichtung S sind elektrisch und/oder hydraulisch mit einer Regeleinheit CU verbunden, die (nicht dargestellt) an die Baumaschinensteuerung angeschlossen ist. Die Regeleinheit CU ist computerisiert und programmierbar bzw. über nicht dargestellte Eingabe- und Anzeigeeinrichtungen handhabbar. Sie lässt sich beispielsweise für einen Notbetrieb manuell übersteuern. Ferner lässt sich für die Regeleinheit CU eine wählbare Solldifferenz zwischen der Drehzahl des Heckantriebs HA und Solldrehzahlen der Vorderräder in Frontantrieb FA einstellen (Aggressivität).

Im Blockschaltbild in Fig. 3 ist die Hydrauliksteuerung S mit einer Drucksteuerung ST angedeutet. Die Hydrauliksteuerung S weist (entsprechend den Fig. 1 und 2) vier Hydraulikstromregelkreise 20, 21, 22, 23 auf, deren jede einem Hydromotor M5, M5' usw. eines Vorderrades zugeordnet ist. Die Regelkreise 20 bis 23 sind zwischen der Hauptpumpe P2 und Arbeitsleitungen 28, 29 der Hydromotoren angeordnet. Ferner ist ein Lastdrucksignal-Einstellblock 19 vorgesehen.

Die Hauptpumpe P2 ist beispielsweise eine lastdrucksignalgeregelte Stellpumpe 16 mit einem Schluckvolumen, das in etwa dem Schluckvolumen jedes Hydromotors M5, M5' entspricht. Die Hauptpumpe P2 weist eine Regelsektion 17 auf, in der über eine Steuerleitung 18 aus dem Block 19 lastabhängig der jeweils eingespeiste Druck gesteuert wird (Pl-Regelung). Die Druckseite der Hauptpumpe P2 ist über eine Druckleitung 27 an alle Regelkreise 20 bis 23 angeschlossen.

Im Lastdrucksignalblock 19 ist ein Einstellventil 24 enthalten, das durch einen Lastdrucksignal-Proportionalmagneten 25 verstellbar ist, um das Lastdrucksignal für die Regelsektion 17 in Abhängigkeit vom durch die Regeleinheit CU eingestellten Strom einzustellen. Das Lastdrucksignal wird im übrigen über eine die Regelkreise 20 bis 23 durchsetzende Steuerdruckleitung 18' bereitgestellt nach Maßgabe des höchsten Lastdrucks an einem der Hydromotoren M5, M5' usw. Für das Lastdrucksignal könnte wahlweise eines von mehreren vorgesehenen Einstellventilen benutzt werden (nicht gezeigt).

In jedem Regelkreis 20 bis 23 ist in einer von der Druckleitung 27 abzweigenden Leitung ein Zulaufregler 26 und stromab des Zulaufreglers ein Mehrwege-Proportional-Steuerschieber 31 vorgesehen, der z.B. wenigstens eine Druckvorsteuerung 30 aufweist und gegen Federkraft verstellbar ist. Die Druckvorsteuerung 30 erhält den Vorsteuerdruck aus einem Vorsteuerventil 32, das durch einen Drehzahl-Proportionalmagneten 33 betätigbar ist, der an die Regeleinheit CU angeschlossen ist. Die weiteren Regelkreise 21, 22, 23 weisen gleichartige Ausstattungen auf, z.B. je einen Steuerschieber 31' und einen Drehzahl-Proportionalmagneten 33'. Bei der gezeigten Ausführungsform sind die Steuerschieber 31, 31' mit Lastdruckabzapfungen ausgebildet, über die der jeweilige Lastdruck in die Steuerdruckleitung 18' gebracht wird (sind beispielsweise nicht gezeigte Wechselventile vorgesehen, um im Block 19 den jeweils höchsten Lastdruck für das Lastdrucksignal zu erhalten).

Jeder Hydromotor M5, M5' ist in der gezeigten Ausführung ein drehrichtungsumkehrbarer Stellmotor mit einem Schluckvolumeneinstellkreis 34. Das Schluckvolumen wird durch ein Ventil 35 eingestellt, das durch einen Pilotdruck 36 gegen Federkraft beaufschlagbar ist. Unter der Federkraft stellt das Druckregelventil 35 das minimale Schluckvolumen, z.B. Null, ein. Schließlich ist gestrichelt eine Druckbegrenzungsvorrichtung DB für die Hauptpumpe P2 zur Begrenzung des maximalen Drehmoments vorgesehen, z.B. im Block 19. Zusätzlich oder alternativ ist es möglich, jeden Regelkreis 20 bis 23 mit einer eigenen Druckbegrenzungsvorrichtung auszustatten. Alternativ könnte jeder Hydromotor M5, M5' ein Konstant-Motor mit Freilauf sein, oder der Hydromotor mit Nachsaugung wirken, um bei Transportfahrt deaktiviert werden zu können.

In Fig. 2 sind Drehzahlsensoren 14 für jedes Vorderrad 5, 6, 5', 6' vorgesehen und wenigstens ein Lenkwinkelsensor 37. Auch für das Hinterrad ist pro Seite wenigstens ein Drehzahlsensor 15 vorgesehen. Die Sensoren sind an die Regeleinheit CU angeschlossen.

In Fig. 3 ist schematisch angedeutet, dass an die Regeleinheit ein Drehzahl-Solldifferenzwähler D, der oder die Lenkwinkelsensoren L, ein Fahrtrichtungsmelder R, ein Sollgeschwindigkeits-Vorwähler V, eine Drehmoment-Vorwähleinrichtung W und ein Notbetriebsschalter N u.a. angeschlossen sind.

### Operation:

### Arbeitsfahrt vorwärts:

Für die Arbeitsfahrt (Vorwärtsrichtung) wird eine Sollgeschwindigkeit vorgewählt und der Regeleinheit CU gemeldet. Die Hauptpumpe P2 wird lastabhängig geregelt und liefert den Druck zum Erzeugen eines maximalen Drehmoments für die Hydromotoren M5, M5'. Die Pumpe P1 (P1') liefert den Druck/den Hydraulik-Strom für die Heckantriebs-Antriebseinheiten 8, 8'. Die jeweiligen Ist-Drehzahlen werden permanent gemessen. Die Solldifferenz oder ein Solldifferenzverhältnis zwischen der Drehzahl im Frontantrieb und der Drehzahl im Heckantrieb ist vorgewählt. Auf der Basis der eingestellten z.B. prozentuellen Solldifferenz (Aggressivität) und der gemessenen Ist-Drehzahldifferenz oder dem Ist-Drehzahlverhältnis wird von der Regeleinheit CU beispielsweise mittels des Lastdrucksignal-Proportionalmagneten 25 das maximale Drehmoment des Frontantriebs eingestellt, beispielsweise nach der Formel M=K*(X-(n_{FA}-n_{HA})), wobei M das Drehmoment bzw. die Drehmomentzunahme bzw. -abnahme bedeutet, K' eine z.B. systembedingte Konstante ist, X der Drehzahl-Solldifferenz entspricht, n_{FA} die Ist-Drehzahl des Frontantriebs und n_{HA} die gemessene Drehzahl des Heckantriebs ist. Der Drehmomentaufbau erfolgt automatisch und lastabhängig.

Das maximale Drehmoment des Frontantriebs wird um so größer desto höher momentan die Drehzahl des Heckantriebs im Vergleich zur Drehzahl des Frontantriebs ist. Über den bzw. die Drehzahl-Proportionalmagneten 33 (33') wird für die Hydromotoren M5, M5' gemeinsam oder individuell eine Solldrehzahl eingestellt, d.h. der Hydraulikstrom, den der Steuerschieber 31, 31' in die Arbeitsleitung 28 oder 29 im Frontantrieb automatisch ein, solange die Traktionsverhältnisse dies zulassen. Das Drehmoment wird sicherheitshalber und systembedingt wählbar durch die Druckbegrenzungsvorrichtung DB begrenzt. Bis zur Drehmomentgrenze ist die Solldrehzahlvorgabe wirkungslos, d.h., jedes Vorderrad dreht, wie es zum Aufbringen des maximalen Drehmoments erforderlich ist. Die Drehzahl des Heckantriebs wird dann momentan höher als die Drehzahl des Frontantriebs, wenn wenigstens ein Hinterrad Schlupf aufbaut. Dadurch wird aber das Drehmoment (z.B. nach der Formel) an den Vorderrädem gesteigert und nimmt in der Folge der Radschlupf an den Vorderrädern zu. Damit nehmen das Drehmoment und der Schlupf am Hinterrad ab. Da die Hinterräder in Relation zum Frontantrieb dann wieder langsamer drehen, nimmt auch das Drehmoment an den Vorderrädern wieder ab. Es stellt sich bei der Sollgeschwindigkeit der Baumaschine ein Gleichgewichtszustand zwischen dem vom Frontantrieb aufgebrachten Drehmoment und dem vom Heckantrieb aufgebrachten Drehmoment ein.

Sollte wenigstens ein Vorderrad Traktion verlieren und kein nennenswertes Drehmoment mehr aufbringen, steigt seine Drehzahl auf die eingestellte Solldrehzahl an. Da der Druck dabei nicht verändert wird, arbeiten die anderen Vorderräder unabhängig mit definiertem Drehmoment weiter. Die Solldrehzahl des dann schneller drehenden Vorderrades wird über den Hydraulikstrom durch den Steuerschieber gehalten. Greift das betroffene Vorderrad erneut, dann wird unmittelbar wieder das maximale Drehmoment übertragen und wird die Solldrehzahlvorgabe wieder wirkungslos, weil auch dieses Vorderrad dann so schnell dreht, dass das maximale Drehmoment übertragen wird.

Dank der Einzel-Erfassung der Drehzahlen der Vorderräder ist die Steuereinheit CU über den Traktionsverlust des betroffenen Vorderrades informiert, und darüber, dass das wenigstens eine betroffene Vorderrad mit der Solldrehzahl läuft. Es kann dann als eine Alternative eine Programmroutine eingesetzt werden, um über den Drehzahl-Proportional-Magneten 33 des betroffenen Hydromotors M5, M5' sogar dessen Hydraulikstrom (ohne den Druck zu vermindern) und die Drehzahl zu reduzieren, bis das Vorderrad wieder greift.

Sollten grundsätzlich die Drehzahlsensoren 14, 15 und/oder die Lenkwinkelsensoren 37 fehlerhaft arbeiten, so wird die Fehlerkondition ermittelt und auf Notbetrieb umgeschaltet. Das Drehmoment für den Frontantrieb kann dann manuell vorgewählt werden. Die Aggressivität des Drehmoments im Frontantrieb lässt sich grundsätzlich wählen, wie auch die Solldifferenz der Drehzahlen. Traktionsverluste im Frontantrieb oder/und im Heckantrieb werden automatisch erkannt und berücksichtigt bzw. als Anlass für Korrekturmaßnahmen benutzt. Die Solldrehzahlen der Vorderräder werden in Abhängigkeit vom Lenkwinkel eingestellt oder vorgegeben. Das unkontrollierte Durchrutschen einzelner Räder wird durch Überlagerung der Drehmoment- und der Drehzahleinstellung vermieden.

### Transportfahrt:

Zur Transportfahrt wird der Frontantrieb deaktiviert, beispielsweise indem Schluckvolumen der Hydromotoren M5, M5' usw. über das Druckschaltventil 35 auf Null gestellt wird, und gegebenenfalls auch durch Zurücknehmen des Schluckvolumens der Hauptpumpe P2.

Die Ausgleichsleitung 9 (Fig. 2) ist über das Absperrorgan 10 auf Durchgang geschaltet. Die nicht gezeigten Pumpen und Stromregler der Antriebseinheiten 8, 8' werden synchron und gewichtet mit dem Lenkwinkel vom Drehzahlregler 11 angesteuert. Bei dieser Drehzahlregelung wird ein Mittelwert der linken und rechten, gemessenen Heckantriebs-Drehzahlen zugrundegelegt. Über die durchgängige Ausgleichsleitung 9 arbeiten beide Antriebseinheiten 8, 8' auf gleichem Druckniveau. Bei Kurvenfahrt fließt eine geringe Hydraulikmenge von der Kurveninnenseite zur Kurvenaußenseite.

Verliert ein Hinterrad Traktion, bricht dennoch der Systemdruck nicht zusammen, weil die entstehende Drehzahldifferenz gemessen und bei Erreichen eines unzulässigen Werts zum Anlass genommen wird, die Ausgleichsleitung 9 über das Absperrorgan 10 abzusperren und auf eine getrennte Drehzahlregelung für beide Seiten umzustellen (Differenzialsperrung). Dann setzt zumindest das mit Traktion arbeitende Hinterrad noch Zugkraft um. Ist in dieser Differenzialsperrungs-Betriebskondition eine vorbestimmte Zeit verstrichen, dann wird automatisch die Ausgleichsleitung 9 wieder auf Durchgang geschaltet.

## Patentansprüche

1. Verfahren zum Steuern einer Baumaschine (M), insbesondere eines Rad-Straßenfertigers (S), die einen Heckantrieb (HA) mit mindestens zwei angetriebenen Hinterrädern (3, 3') und einen wahlweise zuschaltbaren Frontantrieb (FA) mit mindestens zwei lenkbaren, über hydrostatische Antriebseinheiten (12, 13, 12', 13') antreibbare Vorderräder (5, 6, 5', 6') aufweist, wobei die Drehzahlen der Vorderräder einzeln und die Drehzahl des Heckantriebs erfasst und für den Frontantrieb eine/oder mehrere das aufgebrachte Drehmoment beeinflussende Drucksteuerungen unter Berücksichtigung der erfassten Drehzahlen durchgeführt werden, **gekennzeichnet durch** folgende Schritte:
a) für die Vorderräder (5, 6, 5', 6') werden im Frontantrieb (FA) gemeinsam oder individuell in Relation zur Drehzahl im Heckantrieb (HA) Solldrehzahlen um eine Solldifferenz höher bzw. ein Solldifferenz-Verhältnis vorgegeben, mit der bzw. dem bei vergleichbaren Traktionsverhältnissen beim Frontantrieb und Heckantrieb im Frontantrieb (FA) ein maximales Drehmoment erzielbar ist,
b) die Ist-Drehzahldifferenz zwischen dem Heckantrieb (HA) und dem Frontantrieb (FA) wird fortlaufend gemessen,
c) das maximale Drehmoment für den Frontantrieb (FA) wird über die Drucksteuerung abhängig von der gemessenen Ist-Drehzahldifferenz bzw. dem Ist-Drehzahl-Verhältnis und der gewählten Solldifferenz bzw. dem Solldifferenz-Verhältnis eingestellt,
d) bei Aufbringen des maximalen Drehmoments mit dem Frontantrieb (FA) wird unter automatischem Herbeiführen eines Gleichgewichts zwischen dem vom Frontantrieb aufgebrachten maximalen Drehmoment und dem vom Heckantrieb aufgebrachten Drehmoment die Drucksteuerung gegenüber der Solldrehzahlvorgabe für jedes Vorderrad bevorrechtet, und
e) bei Traktionsverlust wenigstens eines Vorderrades wird bei unveränderter Drucksteuerung nur dessen Drehzahl mit der Solldrehzahlvorgabe begrenzt.

2. Verfahren nach Anspruch 1, **dadurch gekennzeichnet, dass** die Drehzahl des jeweiligen bei Traktionsverlust durchgehenden Vorderrads (5, 6, 5', 6') zunächst mit seiner Solldrehzahl begrenzt wird, und dass nachfolgend die Drehzahl dieses Vorderrades bei unveränderter Drucksteuerung reduziert wird, bis das Vorderrad wieder greift.

3. Verfahren nach Anspruch 1, **dadurch gekennzeichnet, dass** zum Aufbringen des maximalen Drehmoments im Frontantrieb (FA) über die Drucksteuerung der den Hydromotoren (M5, M5') der hydrostatischen Antriebseinheiten (12, 13, 12', 13') aufgegebene Druck einzeln oder gemeinsam eingestellt wird, dass zur Vorgabe der Solldrehzahlen der Vorderräder der Hydraulikstrom für jede hydrostatische Antriebseinheit (12, 13, 12', 13') eingestellt wird, und dass die Hydraulikströme für die Hydromotoren der Vorderräder individuell variiert werden.

4. Verfahren nach Anspruch 1, **dadurch gekennzeichnet, dass** bei der Vorgabe der Solldrehzahlen der am Frontantrieb (FA) gemessene Lenkwinkel berücksichtigt wird für individuell unterschiedliche Solldrehzahlen der Vorderräder.

5. Verfahren nach Anspruch 1, **dadurch gekennzeichnet, dass** bei der Messung der Ist-Drehzahldifferenz zwischen dem Heckantrieb und dem Frontantrieb zum Aufbauen des maximalen Drehmoments für den Frontantrieb die Drehzahlen mit Hilfe des gemessenen Ist-Lenkwinkels gewichtet werden.

6. Verfahren nach Anspruch 1, **dadurch gekennzeichnet, dass** die Drehzahlsensoren (14, 15) und/oder Lenkwinkelsensoren (37) auf Fehlerkonditionen überwacht und aus einer festgestellten Fehlerkondition automatisch auf einen Notbetrieb mit manueller Drehmomentvorwahl, insbesondere für die Drucksteuerung des Frontantriebs (FA), umgeschaltet wird.

7. Verfahren nach wenigstens einem der vorhergehenden Ansprüche, **dadurch gekennzeichnet, dass** für Transportfahrt der Frontantrieb (FA) deaktiviert und jeweils mit einer Pumpe und einem Volumen-Stromregler ausgestattete hydrostatische Heckantriebs-Antriebseinheiten (8, 8') an den beiden Seiten über eine Ausgleichsleitung (9) verbunden und die Drehzahlen der Hinterräder (3, 4, 3', 4') gemeinsam geregelt werden, und dass bei einem einseitigen Traktionsverlust bei Transportfahrt die Ausgleichsleitung (9) zur automatischen Differenzialsperrung abgesperrt und nachfolgend die Drehzahlen der Hinterräder individuell geregelt werden.

8. Verfahren nach Anspruch 7, **dadurch gekennzeichnet, dass** bei durchgängiger Ausgleichsleitung (9) die Pumpe und der Volumen-Stromregler der jeweiligen Antriebseinheit (8, 8') von nur einem Drehzahlregler (11) mit einem Drehzahl-Mittelwert beider Seiten und auf einem gemeinsamen, über die Ausgleichsleitung (9) hergestellten Druckniveau gesteuert werden, dass die Heckantriebs-Drehzahlen an beiden Seiten fortlaufend abgetastet und verglichen werden, dass eine unter Berücksichtigung des Lenkwinkels unzulässige Ist-Drehzahldifferenz zwischen den beiden Seiten ermittelt wird, und dass mit Ermittlung der unzulässigen Ist-Drehzahldifferenz die Ausgleichsleitung (9) abgesperrt und auf seitenindividuelle Drehzahlregelung umgestellt wird.

9. Baumaschine (M), insbesondere Rad-Straßenfertiger (F), mit einem hydrostatische Antriebseinheiten (8, 8') aufweisenden Heckantrieb (HA)und einem wahlweise zuschaltbaren, mindestens zwei Vorderräder (5, 6, 5', 6') aufweisenden Frontantrieb (FA) mit einer einen Hydromotor (M5, M5') enthaltenden hydrostatischen Antriebseinheit (12, 13, 12', 13') für jedes Vorderrad, mit Drehzahlsensoren (14, 15) für die Vorderräder und den Heckantrieb, und mit einer Regeleinheit (CU) zum Regeln des vom Frontantrieb aufgebrachten Drehmoments u.a. in Abhängigkeit von den Drehzahlen und/oder den Traktionsverhältnissen, wobei für die Antriebseinheiten (12, 13, 12', 13') des Frontantriebs (FA) eine gemeinsame Hauptpumpe (P2) als Druckquelle und eine Drucksteuerung (ST) zum Einstellen des Drehmoments im Frontantrieb vorgesehen sind, **dadurch gekennzeichnet, dass** jede Antriebseinheit (12, 13, 13', 12') im Frontantrieb (FA) einen individuellen, an die Regeleinheit (CU) angeschlossenen Hydraulikstromregelkreis (20, 21, 22, 23) aufweist.

10. Baumaschine nach Anspruch 9, **dadurch gekennzeichnet, dass** der dem Hydromotor (M5, M5') im Frontantrieb (FA) zugehörige Hydraulikstromregelkreis (20, 21, 22, 23) zwischen dem Hydromotor und der Hauptpumpe (P2) vorgesehen ist.

11. Baumaschine nach Anspruch 9, **dadurch gekennzeichnet, dass** die Hauptpumpe (P2) eine lastdrucksignalgeregelte Stellpumpe (16) mit einem dem Schluckvolumen jedes Hydromotors (M5, M5') im Frontantrieb (FA) weitgehend entsprechenden Schluckvolumen ist, deren Druckseite an parallele Versorgungsanschlüsse der Hydraulikstromregelkreise (20, 21, 22, 23) und deren Regelsektion (17) an einen Lastdrucksignal-Bereitstellungsblock (19) angeschlossen sind, wobei zur Drehmomentbegrenzung wenigstens eine gemeinsame oder pro Vorderrad eine einstellbare Druckbegrenzungsvorrichtung vorgesehen ist.

12. Baumaschine nach Anspruch 11, **dadurch gekennzeichnet, dass** im Lastdrucksignal-Bereitstellungsblock (19) ein oder mehrere durch einen an die Regeleinheit (CU) angeschlossenen Lastdrucksignal-Proportionalmagneten (25) betätigtes Einstellventil(e) (24) enthalten ist(sind).

13. Baumaschine nach Anspruch 10, **dadurch gekennzeichnet, dass** der Hydromotor (M5, M5') im Schluckvolumen-Regelkreis (34) ein in einer federbelasteten Grundstellung ein minimales Schluckvolumen einstellendes Druckschaltventil (35) enthält, das gegen die Federkraft durch einen Pilotdruck (36) in Richtung auf eine Steigerung des Schluckvolumens verstellbar ist.

14. Baumaschine nach Anspruch 9, **dadurch gekennzeichnet, dass** jeder Hydraulikstromregelkreis (20, 21, 22, 23) zwischen dem Versorgungsanschluss und zwei an den Hydromotor (M5, M5') angeschlossenen Arbeitsleitungen (28, 29) einen vorgesteuerten Mehrwege-Proportionalsteuerschieber (31, 31') mit integrierter Lastdruckanzapfung (27), einem Zulaufregler (26) und ein durch einen an die Regeleinheit (CU) angeschlossenen Drehzahl-Proportionalmagneten (33, 33') einstellbares Vorsteuerventil (26') aufweist, wobei der Hydraulikstrom für den Hydromotor mit dem Beaufschlagungsstrom des Drehzahl-Proportionalmagneten (33, 33') einstellbar ist.

15. Baumaschine nach wenigstens einem der Ansprüche 9 bis 14, **dadurch gekennzeichnet, dass** an die computerisierte und programmierbare Regeleinheit (CU) auch Drehzahlsensoren (14) aller Vorderräder, ein Drehzahl-Solldifferenzwähler (D), Drehzahlsensoren (15) des Heckantriebs, Lenkwinkelsensoren (37, L) des Frontantriebs (FA) und/oder der Baumaschine (M), ein Fahrtrichtungs-Melder (R), ein Arbeitsfahrtoder Transportfahrt-Melder, ein Sollgeschwindigkeits-Vorwähler (V), eine Drehmoment-Vorwähleinrichtung (W), und dgl., angeschlossen sind.

16. Baumaschine nach wenigstens einem der Ansprüche 9 bis 15, **dadurch gekennzeichnet, dass** die Baumaschine (M) ein Rad-Straßenfertiger (F) mit jeweils wenigstens einem Hinterrad (3, 3') und jeweils einem oder zwei lenkbaren Vorderrädern (5, 6, 5', 6') pro Seite ist, dass die Drucksteuerung (ST) Vorrang hat gegenüber der Solldrehzahlvorgabe für die Vorderräder, und dass bei Traktionsverlust wenigstens eines Vorderrads zur Drehzahlabweichung die Drucksteuerung und die Hydraulikstromregelung für dieses Vorderrad wirksam werden.
